# FASCICULE DE BREVET EUROPEEN

(11) **EP 2 097 594 B1**
(45) Date de publication et mention de la délivrance du brevet: **03.01.2018**
(21) Numéro de dépôt: 07858704.5
(22) Date de dépôt: 15.11.2007
(51) Int. Cl.: E04F 19/02, B23D 45/20, B21D 49/00

(54) **PROCÉDÉ ET DISPOSITIF DE FABRICATION D'UN PROFILÉ ENROBÉ D'UN FEUILLARD METALLIQUE**
VERFAHREN UND VORRICHTUNG ZUR HERSTELLUNG EINES VERBUNDPROFIL MIT METALLFOLIENBESCHICHTUNG
PROCESS AND APPARATUS FOR THE MANUFACTURE OF A PROFILE COVERED WITH A METAL FOIL

(30) Priorité: 16.11.2006 FR 0654931
(43) Date de publication de la demande: 09.09.2009
(73) Titulaire: Profiline, Societe A Responsabilite Limitee, 68700 Cernay (FR)
(72) Inventeur: KIPFER, Denis, 68800 Rammersmatt (FR)
(74) Mandataire: Rhein, Alain
(86) Numéro de dépôt international: PCT/FR2007/052349
(87) Numéro de publication internationale: WO 2008/059179

(56) Documents cités:
- EP-A2- 0 220 646
- BE-A- 699 571
- FR-A- 2 307 625
- GB-A- 2 037 626
- GB-A- 2 338 448
- US-A- 4 724 027

## Description

La présente invention concerne un procédé de fabrication d'un profilé complexe constitué d'un profilé métallique ou non-métallique enrobé d'une bande métallique, ainsi qu'un dispositif de mise en oeuvre de ce procédé. La présente invention entre dans le domaine de la menuiserie du bâtiment.

L'invention permet plus particulièrement d'obtenir des profilés utilisés comme accessoires dans le second oeuvre du bâtiment.

Ces profilés sont en général destinés à être utilisés comme accessoires à la pose de parquet flottant, ou comme éléments de jonction entre des éléments de sol et/ou de murs, comme des barres de seuil, des nez de marche, des plinthes, ou analogues. D'autres applications concernent des fermetures pour le bâtiment: portes, fenêtres, volets, vérandas, clôtures ou similaire, ainsi que tous les domaines où des profilés présentent un intérêt en tant que pièces de sécurité ou de jonction : goulottes électriques, arrêts de carrelages, ou encore en tant qu'éléments de décor.

La fabrication de panneaux revêtus est connue, voir par exemple le document FR 2 307 625 A, qui divulgue un procédé et un dispositif de revêtement des chants de panneaux en bois par application d'une bande continue, sur une succession de panneaux en déplacement continu selon une direction longitudinale, et espacés mutuellement. Le tronçonnage de la bande est réalisé par un mécanisme de tronçonnage avec deux outils à coulissement longitudinal et transversal. Il est aussi connu de fabriquer des profilés en alliage d'aluminium, ou en matière plastique, voire en bois, revêtus de films en papier ou en matière plastique, sur des lignes d'enrobage. Ces revêtements offrent un grand choix de décors.

Toutefois ces profilés, conçus à usage domestique, s'adaptent mal à un usage professionnel intensif.

La confection de profilés métalliques, en métaux ou alliages d'aluminium, laiton ou analogues, apporte une première réponse à ce problème de résistance. Néanmoins de tels profilés en matériaux de faible dureté superficielle sont sensibles aux rayures, et leur surface se dégrade rapidement, quand ils sont soumis à un trafic intense.

Il existe une forte demande du marché pour des profilés en acier inoxydable, qui présenteraient, outre un aspect parfait, une bonne résistance à la fois à la corrosion, aux rayures et aux impacts, et répondraient aux contraintes sanitaires propres aux milieux hospitaliers ou encore de l'industrie agro-alimentaire.

La fabrication de profilés métalliques dans la masse a tenté de répondre à ce besoin. Ces profilés sont coûteux en raison des coûts de matière, et des outillages de filage. En outre les formes particulières de tels profilés comportent d'importantes différences de section, ainsi que des rayons de courbure très faibles, voire des profils à angles vifs, ce rend leur élaboration par tréfilage très problématique. Les tensions internes trop disparates se traduisent par des criques ou autres défauts qui rendent le profilé impropre à son utilisation. Enfin, le délai d'élaboration des outillages ne permet pas une réactivité à un besoin du marché.

Il a encore été imaginé de rapporter un profilé métallique de résistance appropriée, sur une structure telle qu'un autre profilé, notamment métallique, par vissage, soudure, rivetage ou autre moyen de fixation mécanique de coût élevé.

On notera, encore, que l'enrobage d'un profilé avec un film sur une ligne d'enrobage est une opération difficile, en raison de la multiplicité de problèmes techniques: préparation des surfaces, tension du film, température, hygrométrie, régulation de la quantité d'adhésif et des moyens de formage et d'application, entre autres, et qu'il faut résoudre simultanément sous peine de défauts d'adhérence ou d'aspect, tels que bulles d'air, fripage, déchirure, ou autres, qui rendent le produit impropre à toute utilisation.

L'homme du métier, confronté depuis une vingtaine d'années au besoin du marché en profilés à surface métallique dure, et en raison des problèmes existants pour l'enrobage avec des films réputés faciles à travailler, a été dissuadé de tout essai d'enrobage en continu de profilés avec un feuillard métallique en matériau dur d'une épaisseur suffisante pour répondre aux contraintes de service.

On connaît, par le document BE 699 571, dans lequel on retrouve des caractéristiques du préambule de la revendication 1, un profilé complexe, métal sur métal, obtenu par ajustement étroit. Ceci ne garantit pas une adhérence parfaite en tout point. De plus, le procédé que décrit ce document n'est applicable qu'à certains profils très particuliers de profilés en aluminium comportant des ouvertures latérales, c'est-à-dire des gorges dans lesquelles un feuillard peut être serti, ce qui en limite considérablement le champ d'application.

Un autre document GB 2 037 626 A imagine d'introduire un adhésif, ou un ruban adhésif double face entre le profilé et le feuillard. Là non plus, aucune garantie d'adhérence n'est à attendre.

En somme, l'art antérieur ne propose que des solutions dans lesquelles l'adhérence du feuillard au profilé n'est pas, ou est mal garantie, ce qui est incompatible avec des applications en menuiserie du bâtiment, où les profilés sont soumis à de rudes contraintes de service. En pratique, on constate que, faute de garantie d'adhérence, aucun profilé métallique enrobé d'une bande métallique n'est proposé sur le marché.

Aussi la présente invention vient en contradiction avec les préjugés de l'homme du métier, en proposant un procédé et un dispositif pour la fabrication d'un profilé complexe constitué d'un profilé métallique ou non-métallique, enrobé d'une bande métallique, avec une adhérence parfaite de l'un par rapport à l'autre.

La fabrication en continu de tels profilés avec enrobage d'une feuille métallique impose qu'à l'issue il soit nécessaire d'assurer une découpe propre à chaque extrémité du profilé.

La découpe par cisaillement usuellement mise en oeuvre dans le cas d'enrobage de profilés par du film plastique ne peut absolument pas convenir. S'il existe des solutions manuelles, la présente invention répond de façon avantageuse aux nécessités d'un process automatisé et d'une fabrication en continu.

La solution selon l'invention a su répondre au problème en ménageant entre les tronçons de profilés un espacement suffisant pour permettre la mise en oeuvre de moyens de découpe, notamment par fraisage. Cette solution met en oeuvre un dispositif adéquat pour l'exécution de cette opération de découpe. L'invention permet ainsi de proposer sur le marché un profilé complexe constitué d'un profilé métallique enrobé d'un feuillard métallique, avantageusement avec un feuillard métallique qui a une dureté superficielle supérieure à celle dudit profilé, ledit feuillard adhérant audit profilé en tout point d'une des faces dudit feuillard.

L'invention concerne donc un procédé d'enrobage de tronçons selon la revendication 1. Selon une caractéristique de l'invention, on choisit pour ledit feuillard métallique de l'acier inoxydable.

L'invention concerne aussi un dispositif de mise en oeuvre de ce procédé selon la revendication 10. D'autres caractéristiques et avantages de l'invention ressortiront de la description détaillée qui va suivre des modes de réalisation non limitatifs de l'invention, en référence aux figures annexées dans lesquelles :
- la figure 1 représente de façon schématisée, un logigramme du procédé selon l'invention ;
- la figure 2 représente, de façon schématisée, partielle, et en élévation, un dispositif de mise en oeuvre du procédé selon l'invention.

L'invention permet de proposer sur le marché un profilé complexe 1 constitué d'un tronçon de profilé 2, préférentiellement sous la forme d'un alliage métallique, et en particulier en alliage d'aluminium, enrobé d'un feuillard métallique 3, en particulier pour le domaine du second oeuvre du bâtiment.

De façon innovante, le feuillard métallique 3 a une dureté superficielle supérieure à celle du profilé 2 qu'il entoure. Ce feuillard 3, qui comporte deux faces principales correspondant à ses plus grandes surfaces latérales, est fixé au profilé 2 de façon à adhérer en tout point d'une de ces deux faces à ce profilé.

L'invention concerne un procédé de fabrication de tels profilés 1 enrobés avec un feuillard métallique. Selon ce procédé :
- on achemine successivement et les uns derrière les autres des tronçons de profilés 2 pré-découpés, sous l'action de moyens d'aménagé,
- on applique successivement sur ces tronçons de profilés 2, éventuellement après conformage 200 sous l'action de moyens de formage, une bande continue 5 d'un matériau d'enrobage en vue de son collage sur chaque tronçon de profilé 2, pour l'enrober sur la ou les faces du profilé 2 à revêtir, au moins sur une portion de sa périphérie, sous l'action de moyens d'application.

Selon une caractéristique essentielle de l'invention, on effectue l'acheminement 400 de ces tronçons de profilés 2 les uns derrière les autres en générant 500 un espacement entre eux.

On choisit cet espacement suffisant pour permettre la mise en oeuvre de moyens de découpe, notamment par fraisage. Et on règle cet espacement, au niveau de l'alimentation des profilés, dans le cas préféré de fraisage par fraises-scies, à une valeur au moins égale au total des épaisseurs des fraises-scies utilisées.

De façon préférée, l'enrobage comporte un formage de la bande continue 5 autour du tronçon de profilé 2, et concerne l'enrobage de plusieurs faces du tronçon de profilé 2 à revêtir.

La mise en oeuvre de feuillard métallique est délicate, au niveau d'un cycle d'enrobage, notamment en phase de réglage. Les méthodes usuelles d'enrobage de profilés par des films plastiques permettent des interventions aisées en cours de réglage ou de production, lors de constat d'aléas comme des défauts sur des profilés ou analogue : en effet, il est alors toujours facile de couper le film utilisé pour l'enrobage, pour toute intervention, ou pour un simple échange de bobine. On comprend qu'il en est tout à fait autrement dans le cas d'un feuillard métallique.

L'enrobage d'un profilé métallique 2 par une bande continue 5 constituée, selon l'invention, par un feuillard métallique 3, notamment d'acier inoxydable dans l'application préférée de l'invention, pose des problèmes nouveaux, en comparaison de l'enrobage d'un profilé avec un film quelconque.

Le problème principal est celui de la séparation des tronçons de profilés revêtus.

En effet, les procédés usuels de séparation de profilés enrobés avec des films en matière plastique ou analogue, comme la coupe à la volée ou la coupe avec lame et contre-lame, sont absolument inutilisables. D'une part, l'épaisseur et la résistance au cisaillement du feuillard métallique 3 nécessitent la mise en oeuvre de moyens de découpe particuliers relevant de l'usinage des métaux, surtout dans le cas préféré d'utilisation d'un feuillard en acier inoxydable. D'autre part, le positionnement relatif, par rapport à la bande continue 5, des tronçons de profilés 2 successifs, postérieurement à l'adhésion, est irrégulier, en raison de la possibilité de glissement relatif entre le tronçon de profilé 2 et la bande continue 5 avant immobilisation complète. Deux tronçons de profilé successifs 2A, 2B, sont couramment séparés par une distance variable qui peut être aussi bien de quelques millimètres ou de quelques dizaines de millimètres.

La mise au point des opérations de découpe nécessite donc la mise en oeuvre d'un procédé et de moyens particuliers.

Il est donc nécessaire de procéder à une coupe au niveau de chaque extrémité de chaque tronçon de profilé 2, la première aval 6 comme la deuxième amont 7, de façon à séparer de la bande continue 5 le tronçon revêtu 1.

Il s'agit donc d'effectuer la coupe d'un profilé en mouvement en continu sur une ligne de fabrication 4 dans un process automatisé, sans interrompre l'avance de cette ligne 4, après achèvement de l'enrobage et de l'application 600 de la bande continue 5 sur les tronçons de profilés 2, et adhésion complète.

Pour résoudre ce problème nouveau, l'invention met en oeuvre 800 des moyens de découpe 10, qui sont du type à double coupe, conçus pour effectuer les découpes au vol.

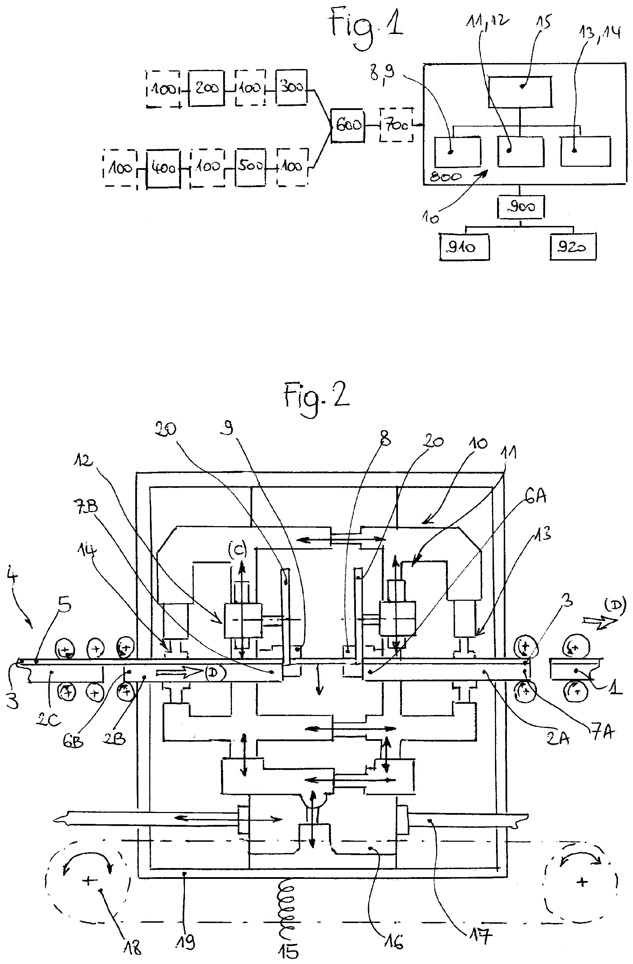

Ces moyens de découpe 10 comportent des moyens de détection, constitués de moyens de détection aval 8 et amont 9, qui sont aptes à repérer l'extrémité aval 6 ou/et amont 7 de chaque tronçon de profilé 2. Dans l'application préférée, tel que visible sur la figure 2, les moyens de détection aval 8 et amont 9 repèrent les extrémités respectivement aval 6A et amont 7B de deux tronçons successifs 2A, 2B. Ces moyens de détection 8, 9, vont permettre de procéder, à ces deux extrémités, à deux opérations de coupe distinctes, tenant compte de l'espacement entre lesdits tronçons de profilé 2A et 2B.

Les moyens de détection aval 8 et amont 9 transmettent, en temps réel, la position des extrémités 6A et 7B à des moyens de commande et de gestion 15. Ces derniers gèrent les mouvements d'au moins deux équipages de coupe, aval 11 et amont 12, qui sont mobiles selon la direction longitudinale D d'avance des tronçons de profilé 2, et l'un par rapport à l'autre, pour les synchroniser chacun avec le tronçon de profilé concerné 2A, 2B, au moment de chaque opération de coupe.

Dans une application préférée, les moyens de détection 8, 9, sont constitués par des cellules photo-électriques, ou analogue, et les moyens de commande et de gestion 15 par un automate programmable, ou similaire.

Les équipages de coupe aval 11 et amont 12 peuvent être conçus mobiles selon au moins une direction de coupe C, de préférence orthogonale à celle de déplacement du profilé, ou encore comporter des organes de coupe présentant cette mobilité.

En somme, les moyens de commande et de gestion 15 sont conçus pour commander les déplacements des différents équipages 11, 12, et organes mobiles de coupe selon les différentes directions D, C. Ils gèrent l'écartement longitudinal des équipages mobiles de coupe 11, 12, en fonction de l'espacement réel des tronçons de profilés consécutifs 2A, 2B, déterminé par les moyens de détection 8, 9.

De façon préférée mais non limitative, ces moyens de découpe sont regroupés sur un dispositif de découpe unique.

Ce dispositif de découpe est alors conçu mobile, sous l'effet de moyens de motorisation 18 commandés par les moyens de commande et de gestion 15, parallèlement à la direction longitudinale D, et est de préférence constitué par un chariot 16 coopérant avec des moyens de guidage 17 selon cette direction. Il est ainsi rendu apte à suivre chaque profilé dans son avance vers la sortie de la ligne de fabrication, ainsi qu'à revenir en amont pour suivre le profilé qui lui succède.

Dans un mode préféré de réalisation, tel que visible sur la figure 2, chaque équipage de coupe 11, 12 mobile comporte des moyens d'entraînement, tel un moteur électrique ou analogue, d'un organe de coupe 20, tel qu'une fraise-scie.

Les moyens de commande et de gestion 15 positionnent un équipage de coupe aval 11 de façon à ce que son organe de coupe 20 vienne en concordance avec l'extrémité aval 6A d'un premier profilé 2A de façon à permettre l'arasement de la bande continue 5 de feuillard métallique 3 au droit de cette extrémité 6A.

Des moyens d'ablocage aval 13, solidaires en translation longitudinale dudit équipage mobile de coupe 11, sont alors actionnés de façon à maintenir ce tronçon de profilé 2A pendant l'opération de coupe.

De préférence simultanément, les moyens de commande et de gestion 15 positionnent longitudinalement un équipage mobile de coupe amont 12 façon à ce que son organe de coupe 20 vienne en concordance avec l'extrémité amont 7B du tronçon de profilé 2B adjacent en amont au premier tronçon de profilé 2A plus en aval.

De façon similaire, des moyens d'ablocage amont 14, solidaires en translation longitudinale de l'équipage mobile de coupe amont 12, sont actionnés de façon à maintenir le tronçon de profilé 2B pendant l'opération de coupe.

Après exécution des deux coupes, les moyens d'ablocage aval 13 libèrent ensuite le profilé le plus en aval 2A, pour autoriser son convoyage vers une station de sortie, notamment de contrôle et d'emballage, ces dernières opérations étant de préférence effectuées en continu.

Après libération complète des moyens d'ablocage aval 13 et amont 14, les moyens de commande et de gestion 15 impriment aux équipages de coupe mobiles aval 11 et amont 12, ou au chariot 16 qui les supporte, un ordre de mouvement de translation de sens contraire à celui du profilé, de façon à les ramener les moyens de découpe 10 dans une position plus en amont, et à les rendre apte à une nouvelle opération de découpe.

On comprend qu'il est possible d'individualiser les mouvements de chaque équipage mobile de coupe aval 11 ou amont 12 selon la direction de coupe C et selon la direction longitudinale D. Dans un souci de simplification de commande et de maintenance, les mouvements sont avantageusement couplés quand c'est possible. Dans le mode de réalisation tel que visible sur la figure 2, les mouvements des deux équipages mobiles de coupe aval 11 ou amont 12 selon la direction de coupe C sont combinés, ce qui permet de réduire le nombre de composants.

Pour la propreté de la ligne, chaque équipage mobile de coupe 11, 12, est avantageusement entouré par un carter 19, conçu apte à être raccordé à des moyens d'aspiration de vapeurs, poussières, et copeaux, voire chutes de feuillard, résultant des opérations de coupe. On comprend que dans le mode particulier de réalisation où deux équipages mobiles de coupe 11, 12 sont embarqués sur un même chariot 16, ce dernier comporte avantageusement un tel carter 19 unique, dont il est solidaire.

Cette disposition permet de conserver une ligne de fabrication 4 compacte et assez courte, car elle permet, pendant l'avance d'un tronçon de profilé 2 dont la première extrémité aval 6 vient d'être coupée, le retour rapide dans leur position amont des moyens de découpe 10 pour la double coupe de son extrémité amont 7 ainsi que de l'extrémité aval du tronçon de profilé qui le suit. Elle présente, en outre, l'avantage de permettre le panachage de tronçons de profilés 2 de différentes longueurs sur la même ligne.

Naturellement il est encore imaginable, sans s'éloigner de l'esprit de la présente invention, d'utiliser un tel dispositif pour commander les équipages mobiles de coupe pour la coupe simultanée à l'extrémité aval et à l'extrémité amont d'un même tronçon de profilé. Dans ce cas, après adhésion de la bande 5 au tronçon de profilé 2, on repère les extrémités aval 6A et amont 7A d'un même tronçon 2A, puis on procède, à ces deux extrémités, aval 6A et amont 7A, à deux opérations de coupe distinctes, tenant compte de l'espacement entre elles et de la position du tronçon 2A.

On effectue enfin, après la découpe 900, d'une part en aval l'évacuation 920 de chaque tronçon de profilé complexe 1 terminé et découpé, et d'autre part l'évacuation 910 des chutes de bande continue 5 et des déchets provenant des opérations de découpe. L'évacuation des tronçons de profilé 1 terminés peut se faire de différentes façons, dans la direction D tel que visible sur la figure 2, ou transversalement, ou autre.

On notera que les moyens de découpe 10 présentent une polyvalence qui permet leur transformation aisée pour une autre utilisation telle qu'une coupe en continu, par exemple de produit issu de tréfilage, par la mise en oeuvre d'un seul des équipages mobiles de coupe 11, 12.

Les moyens de découpe 10 selon l'invention sont de préférence conçus amovibles, et comportent alors des moyens de repérage et de fixation par rapport à une référence machine, de manière à permettre la libération de la ligne d'enrobage de profilé pour d'autres applications, ainsi que le déplacement de ces moyens de découpe 10 sur d'autres lignes d'enrobage, en fonction des productions à réaliser.

Outre ce problème principal de la coupe aux extrémités du tronçon de profilé, il existe d'autres problèmes spécifiques à la mise en oeuvre d'un feuillard métallique 3 en tant que bande continue 5 d'enrobage.

Selon une caractéristique particulière de l'invention, on soumet, préalablement à son utilisation sur la ligne de fabrication, le feuillard en acier inoxydable à un traitement de réduction des tensions résiduelles de l'acier inoxydable.

La préparation superficielle des supports pour leur adhésion revêt une importance toute particulière. Un traitement de préparation 100, mécanique, ou/et chimique, est généralement nécessaire pour parvenir à la qualité de profilé enrobé recherchée.

Un traitement de préparation mécanique peut se faire en particulier par abrasion ou/et brossage, en continu, sur au moins l'une de ses faces, du feuillard ou/et du profilé.

Un traitement de préparation chimique peut notamment consister en un traitement pour l'ouverture des pores superficielles du matériau.

Des problèmes particuliers sont inhérents aux profilés à revêtir, et à leur mode d'obtention, en particulier par filage. On citera en particulier la présence de graphite dans les pores de profilés en aluminium, qui constitue une gêne considérable lors du collage, si une préparation adéquate pour l'élimination du graphite n'a pas été effectuée avant cette opération.

Le traitement de préparation peut comporter l'application d'un primaire.

Il peut, encore, comporter un traitement thermique pour l'évaporation des solvants après l'application d'un primaire si tel est le cas.

Tel que visible sur le logigramme de la figure 1, ces traitements de préparation 100 peuvent intervenir à différents stades du process, selon leur nature.

Pour le conformage 200 de la bande continue 5, les moyens de formage de la bande continue autour du profilé, ainsi que les moyens d'application de la bande continue 5 enrobée sur le tronçon de profilé 2, sont classiquement constitués de séquences de rouleaux, galets, fers plats et conformateurs divers. En raison de la résistance élevée du matériau à former, il peut être nécessaire de choisir un dimensionnement particulier, ou encore d'utiliser des moyens de pression tels que des vérins ou encore des moyens de rappel élastique, tels des ressorts.

De façon générale, il est difficile de procéder à l'enduction de colle du profilé en raison de sa forme, de ce fait on préfère procéder à l'enduction de la bande continue. Pour l'enduction 300 et le collage de la bande continue sur le profilé on utilise de préférence des moyens d'application de colle. Ces derniers sont notamment constitués de rouleaux ou de buses à lèvres, ou par des pistolets commandés en débit.

Des moyens d'application 600 maintiennent solidarisés la bande continue 5 et le profilé 2 pendant leur adhésion l'un à l'autre. En parallèle ou en aval de ces derniers, dans un mode de réalisation préféré, on ajoute des moyens de finition ou/et de séchage 700, qui peuvent notamment comporter des réglettes de calibrage ou d'appui, des moyens accélérateurs d'adhésion, notamment thermiques de chauffage ou/et de refroidissement, des moyens de dépose d'un film de protection, des moyens d'étiquetage, ou autre.

Selon une caractéristique particulière de l'invention, le feuillard utilisé a une épaisseur comprise entre 50 et 200 microns, ces valeurs étant incluses.

De façon préférée mais non limitative, le matériau des tronçons de profilé est choisi dans un alliage d'aluminium ou/et de cuivre ou/et de zinc.

Le procédé tel que décrit ici s'applique aussi de façon particulièrement satisfaisante à l'enrobage de profilés non métalliques. Dans une application particulière, le mode opératoire a été appliqué à un profilé en matière plastique, préférentiellement en PVC, pour son enrobage avec un feuillard d'alliage d'aluminium d'épaisseur comprise entre 50 et 300 microns, préférentiellement entre 80 et 200 microns, et notamment à une valeur de 150 microns.

## Revendications

1. Procédé d'enrobage de tronçons de profilés (2) en matériau métallique non-métallique par un feuillard métallique (3), ledit feuillard ayant une dureté superficielle supérieure à celle dudit profilé (2), et adhérant audit profilé (2) en tout point d'une des faces dudit feuillard (3), **caractérisé en ce que**, sans interrompre l'avance de la ligne de fabrication (4):
- on achemine successivement et les uns derrière les autres lesdits tronçons de profilés (2) sur une ligne de fabrication (4),
- on applique successivement sur ces tronçons de profilé (2), éventuellement après conformage, une bande continue (5) d'un matériau d'enrobage en feuillard métallique (3) en vue de son collage sur chaque tronçon de profilé, pour l'enrober sur la ou les faces à revêtir,
- on effectue l'acheminement desdits tronçons de profilés (2) les uns derrière les autres avec un espacement entre eux,
- après adhésion par collage, on repère les extrémités respectivement aval (6A) et amont (7B) de deux tronçons successifs (2A, 2B), ou les extrémités aval (6A) et amont (7A) d'un même tronçon (2A),
- on procède, à ces deux extrémités, respectivement aval (6A) et amont (7B, 7A), à deux opérations de coupe distinctes par des moyens de découpe relevant de l'usinage, tenant compte de l'espacement entre lesdits tronçons de profilé (2A, 2B) ou de l'espacement entre lesdites extrémités (6A, 7A) et de la position dudit tronçon (2A).

2. Procédé selon la revendication 1 **caractérisé par le fait que** les opérations de coupes distinctes sont effectuées par fraisage.

3. Procédé selon l'une des revendications précédentes **caractérisé par le fait que** on effectue un traitement de préparation mécanique ou/et chimique sur au moins l'une des faces du feuillard ou/et du profilé.

4. Procédé selon la revendication 3 **caractérisé par le fait que** le traitement de préparation mécanique est fait par abrasion ou/et brossage en continu sur au moins l'une des faces du feuillard (3) ou/et du profilé (2) ou/et **par le fait que** le traitement de préparation chimique consiste en un traitement pour l'ouverture des pores superficiels du profilé (2).

5. Procédé selon l'une des revendications précédentes, **caractérisé par le fait que** l'on effectue deux opérations de coupe distinctes à l'aide de fraises-scies, en tenant compte de l'espacement entre lesdits tronçons de profilé (2A, 2B), et que l'on règle cet espacement à une valeur au moins égale au total des épaisseurs des fraises-scies utilisées.

6. Procédé selon l'une des revendications précédentes, **caractérisé par le fait que** lors de l'enrobage on effectue un formage de ladite bande continue (5) en feuillard métallique (3) autour dudit tronçon de profilé (2), et que on effectue ledit enrobage sur plusieurs faces dudit tronçon de profilé (2) à revêtir.

7. Procédé selon l'une des revendications précédentes, **caractérisé par le fait qu'**on choisit pour ladite bande continue (5) un feuillard métallique (3) ou un feuillard en acier inoxydable, d'une épaisseur comprise entre 50 et 200 microns, ces valeurs étant incluses.

8. Procédé selon l'une des revendications précédentes, **caractérisé par le fait qu'**on choisit pour ledit profilé (2) un alliage métallique ou un alliage d'aluminium.

9. Procédé selon l'une des revendications 1 à 7, **caractérisé par le fait qu'**on choisit ledit profilé (2) en matière plastique, préférentiellement en PVC, pour son enrobage avec un feuillard (3) d'alliage d'aluminium d'épaisseur comprise entre 50 et 300 microns.

10. Dispositif de mise en oeuvre du procédé selon l'une des revendications précédentes, **caractérisé par le fait qu'**il comporte des moyens de détection aval (8) et amont (9) conçus aptes à repérer la première extrémité aval (6) ou/et la deuxième amont (7) de chaque tronçon de profilé (2) après adhésion de ladite bande continue (5) sur ce dernier, ledit dispositif comportant encore des moyens de découpe relevant de l'usinage mobiles selon la direction longitudinale (D) d'avance des tronçons de profilé (2) et des moyens d'application de colle, notamment constitués de rouleaux ou de buses à lèvres ou par des pistolets à commande en débit.

11. Dispositif selon la revendication 10 **caractérisé par le fait qu'**il comporte, en parallèle ou en aval desdits moyens d'application, des moyens de finition ou/et de séchage qui peuvent notamment comporter des réglettes de calibrage ou d'appui, des moyens accélérateurs d'adhésion, notamment thermiques de chauffage ou/et de refroidissement, des moyens de dépose d'un film de protection, des moyens d'étiquetage.

12. Dispositif selon l'une des revendications 10 ou 11, **caractérisé par le fait que** lesdits moyens de découpe (10) comportent au moins deux équipages de coupe (11, 12) mobiles indépendamment l'un de l'autre selon ladite direction longitudinale (D) d'avance des tronçons de profilé (2), et conçus aptes à effectuer chacun une découpe d'un tronçon de profilé selon une direction de coupe (C), notamment orthogonale à la précédente.

13. Dispositif selon l'une des revendications 10 à 12, **caractérisé par le fait que** lesdits moyens de découpe (10) comportent des moyens d'ablocage (13, 14) de tronçons de profilé (2) pendant l'opération de coupe.

14. Dispositif selon l'une des revendications 10 à 13, **caractérisé par le fait que** lesdits moyens de découpe (10) sont pilotés par des moyens de commande et de gestion (15) selon le repérage de position effectué par lesdits moyens de détection amont (9) et aval (8) et/ou **par le fait que** lesdits moyens de découpe (10) sont regroupés sur un dispositif de découpe unique, conçu mobile sous l'effet de moyens de motorisation (18) parallèlement à ladite direction longitudinale (D), et notamment constitué par un chariot (16) coopérant avec des moyens de guidage (17) selon cette direction.

15. Dispositif selon l'une des revendications 10 à 14, **caractérisé par le fait qu'**il comporte des moyens mobiles de coupe dudit feuillard (3) avant son encollage, conçus aptes à effectuer une coupe perpendiculaire à sa direction d'avance et de façon synchrone à celle-ci un dispositif de coupe, de façon à pouvoir couper le feuillard avant l'opération d'encollage.

## Patentansprüche

1. Verfahren zum Beschichten von Profilabschnitten (2) aus metallischem oder nichtmetallischem Material mit einem Metallstreifen (3), wobei der besagte Streifen eine Oberflächenhärte hat, die größer ist als diejenige des besagten Profils (2), und an jeder Stelle einer der Flächen des besagten Streifens (3) an dem besagten Profil (2) anhaftet,
**dadurch gekennzeichnet, dass** ohne Unterbrechung des Vorschubs der Produktionslinie (4):
- die weiteren besagten Profilabschnitte (2) aufeinander folgend und nach einander auf eine Produktionslinie (4) befördert werden,
- auf diese Profilabschnitte (2) wird aufeinander folgend, gegebenenfalls nach Formung, ein kontinuierliches Band (5) aus einem Beschichtungsmaterial in der Form eines Metallstreifens angebracht, um es mit jedem Profilabschnitt zu bonden, um damit die zu beschichtenden Fläche bzw. Flächen zu beschichten,
- die Beförderung der besagten Profilabschnitte (2) erfolgt nach einander mit einem Abstand zwischen ihnen,
- nach Anhaften durch Kleben werden das stromabwärtige Ende (6A) bzw. das stromaufwärtige Ende (7B) von zwei aufeinander folgenden Abschnitten (2A, 2B) oder die stromabwärtigen (6A) und stromaufwärtigen (7B) Enden desselben Abschnitts (2A) lokalisiert,
- an den beiden stromabwärtigen (6A) bzw. stromaufwärtigen (7B, 7A) Enden werden zwei unterschiedliche Schneidvorgänge mit für die Bearbeitung verwendeten Schneidmitteln unter Berücksichtigung des Abstands zwischen den besagten Profilabschnitten (2A, 2B) oder des Abstands zwischen den besagten Enden (6A, 7A) und der Position des besagten Abschnitts (2A) vorgenommen.

2. Verfahren nach Anspruch 1, **dadurch gekennzeichnet, dass** die unterschiedlichen Schneidvorgänge durch Fräsbearbeitung durchgeführt werden.

3. Verfahren nach einem der vorhergehenden Ansprüche, **dadurch gekennzeichnet, dass** eine mechanische oder/und chemische Aufbereitungsbehandlung auf mindestens einer der Flächen des Streifens oder/und des Profils durchgeführt wird.

4. Verfahren nach Anspruch 3, **dadurch gekennzeichnet, dass** die mechanische Aufbereitungsbehandlung durch Abrieb oder/und kontinuierliches Abbürsten auf wenigstens einer der Flächen des Streifens (3) oder/und des Profils (2) erfolgt, oder/und dass die chemische Aufbereitungsbehandlung aus einer Behandlung zum Öffnen der Oberflächenporen des Profils (2) besteht.

5. Verfahren nach einem der vorhergehenden Ansprüche, **dadurch gekennzeichnet, dass** zwei unterschiedliche Schneidvorgänge mit Frässägen unter Berücksichtigung des Abstands zwischen den besagten Profilabschnitten (2A, 2B) durchgeführt werden, und dass dieser Abstand auf einen Wert eingestellt wird, der mindestens gleich der Gesamtdicke der verwendeten Frässägen ist.

6. Verfahren nach einem der vorhergehenden Ansprüche, **dadurch gekennzeichnet, dass** während der Beschichtung eine Formung des besagten kontinuierlichen Bandes (5) in der Form eines Metallstreifens (3) um den besagten Profilabschnitt (2) herum durchgeführt wird, und das die besagte Beschichtung auf mehreren Flächen des besagten zu beschichtenden Profilabschnitts (2) durchgeführt wird.

7. Verfahren nach einem der vorhergehenden Ansprüche, **dadurch gekennzeichnet, dass** ein Metallstreifen (3) oder ein Edelstahlstreifen einer Dicke zwischen 50 und 200 Mikron einschließlich für das besagte kontinuierliche Band (5) ausgewählt wird.

8. Verfahren nach einem der vorhergehenden Ansprüche, **dadurch gekennzeichnet, dass** eine Metalllegierung oder eine Aluminumlegierung für das besagte Profil (2) ausgewählt wird.

9. Verfahren nach einem der Ansprüche 1 bis 7, **dadurch gekennzeichnet, dass** das besagte Profil (2) aus Kunststoff, vorzugsweise aus PVC, ausgewählt wird, um mit einem Streifen (3) aus Aluminumlegierung einer Dicke zwischen 50 und 300 Mikron beschichtet zu werden.

10. Vorrichtung zur Durchführung des Verfahrens nach einem der vorhergehenden Ansprüche, **dadurch gekennzeichnet, dass** sie stromabwärtige (8) und stromaufwärtige (9) Erfassungsmittel umfasst, die geeignet sind, das erste stromabwärtige Ende (6) oder/und das zweite stromaufwärtige Ende (7) jedes Profilabschnitts (2) nach dem Anhaften des besagten kontinuierlichen Bandes (5) am letzteren zu erkennen, wobei die besagte Vorrichtung auch bei der Bearbeitung verwendete Schneidmittel umfasst, die in der Längsrichtung (D) des Vorschubs der Profilabschnitte (2) bewegbar sind, und Klebstoffauftragsmittel, die nämlich aus Walzen oder Lippendüsen oder aus durchflussgesteuerten Pistolen bestehen, umfasst.

11. Vorrichtung nach Anspruch 10, **dadurch gekennzeichnet, dass** sie parallel zu oder stromabwärts von den besagten Auftragsmitteln, Endbearbeitungs- oder/und Trocknungsmittel umfasst, die nämlich Kalibrier- oder Stützleisten, Mittel zur Beschleunigung der Anhaftung, nämlich thermische Erwärmungs- oder/und Kühlungsmittel, Mittel zum Ablegen eines Schutzfilms, Etikettiermittel umfassen können.

12. Vorrichtung nach einem der Anprüche 10 oder 11, **dadurch gekennzeichnet, dass** die besagten Schneidmittel (10) wenigstens zwei Schneideinheiten (11, 12) umfassen, die unabhängig voneinander entlang der besagten Längsrichtung (D) des Vorschubs der Profilabschnitte (2) bewegbar sind und jeweils geeignet ausgelegt sind, um einen Profilabschnitt in einer Schneiderichtung (C), nämlich orthogonal zu der vorhergehenden Richtung, zu schneiden.

13. Vorrichtung nach einem der Anprüche 10 bis 12, **dadurch gekennzeichnet, dass** die besagten Schneidmittel (10) Mittel zum Klemmen (13, 14) der Profilabschnitte (2) während des Schneidvorgangs umfassen.

14. Vorrichtung nach einem der Anprüche 10 bis 13, **dadurch gekennzeichnet, dass** die besagten Schneidmittel (10) durch Steuer- und Verwaltungsmittel (15) nach der von den besagten stromaufwärtigen (9) und stromabwärtigen (8) Erfassungsmitteln durchgeführten Positionserfassung gesteuert werden, und/oder dass die besagten Schneidmittel (10) auf einer einzigen Schneidvorrichtung gruppiert sind, die ausgelegt ist, um unter der Wirkung von Motorisierungsmitteln parallel zu der besagten Längsrichtung (D) bewegbar zu sein, und nämlich aus einem Laufwerk (16) besteht, das mit Führungsmitteln (17) in dieser Richtung zusammenwirkt.

15. Vorrichtung nach einem der Anprüche 10 bis 14, **dadurch gekennzeichnet, dass** sie bewegbare Mittel zum Schneiden des besagten Streifens (3) vor dessen Verklebung umfasst, die geeignet ausgelegt sind, um einen Schnitt senkrecht zu ihrer Vorschubrichtung durchzuführen und synchron zum letzteren eine Schneidvorrichtung, sodass sie in der Lage ist, den Streifen vor dem Verklebungsvorgang schneiden zu können.

## Claims

1. A method for coating profile sections (2) made of metallic or non-metallic material with a metal sheet strip (3), said sheet strip having a superficial hardness greater than that of said profile (2) and adhering to said profile (2) at any point of one of the faces of said sheet strip (3),
wherein, without interrupting the progress of the production line (4):
- the other said profile sections (2) are successively conveyed one after another onto a production line (4),
- a continuous strip (5) of a coating material in the form of metal sheet strip (3) is successively applied on these profile sections (2), eventually after shaping, in order to bond it to each profile section, in order to coat it on the face or faces to be coated,
- the conveying of said profile sections (2) is performed one after another with a separation between them,
- after adhesion by gluing, the downstream (6A) and upstream (7B) ends, respectively, of two successive sections (2A, 2B) or the downstream (6A) and upstream (7A) ends of the same section (2A) are identified,
- at these two downstream (6A) and upstream (7B, 7A) ends, respectively, two separate cutting operations are carried out by cutting means used for machining, taking into consideration the separation between said profile sections (2A, 2B) or the separation between said ends (6A, 7A) and the position of said section (2A).

2. The method according to claim 1, wherein the separate cutting operations are performed by milling.

3. The method according to one of the preceding claims, wherein a mechanical or/and chemical preparation treatment is performed on at least one of the faces of the sheet strip or/and of the profile.

4. The method according to claim 3, wherein the mechanical preparation treatment is carried out by abrasion or/and continuous brushing on at least one of the faces of the sheet strip (3) or/and of the profile (2), or/and wherein the chemical preparation treatment consists of a treatment for opening the surface pores of the profile (2).

5. The method according to one of the preceding claims, wherein two separate cutting operations are carried out using milling saws, taking into consideration the separation between said profile sections (2A, 2B) and wherein this separation is adjusted to a value at least equal to the total of the thicknesses of the milling saws being used.

6. The method according to one of the preceding claims, wherein during the coating is performed the shaping of said continuous strip (5) in the form of metal sheet strip (3) around said profile section (2), and wherein said coating is carried out on several faces of said profile section (2) to be coated.

7. The method according to one of the preceding claims, wherein a metal sheet strip (3) or a stainless steel sheet strip with a thickness between 50 and 200 microns, these values included, is selected for said continuous strip (5).

8. The method according to one of the preceding claims, wherein a metal alloy or an aluminum alloy is selected for said profile (2).

9. The method according to one of claims 1 to 7, wherein said profile (2) is chosen made of plastic, preferably of PVC, for being coated with a sheet strip (3) made of aluminum alloy with a thickness between 50 and 300 microns.

10. A device for implementing the method according to one of the preceding claims, wherein it comprises downstream (8) and upstream (9) detection means designed capable of identifying the first downstream end (6) or/and the second upstream end (7) of each profile section (2) after adhesion of said continuous strip (5) to the latter, said device including also cutting means used for machining movable in the longitudinal direction (D) of progress of the profile sections (2) and means for applying glue, namely formed of rollers or lip nozzles or by flow-controlled guns.

11. The device according to claim 10, wherein it comprises, parallel to or downstream of said means for applying, finishing or/and drying means, which can namely include calibration or supporting strips, means for accelerating the adhesion, namely thermal heating and/or cooling means, means for depositing a protective film, labeling means.

12. The device according to one of claims 10 or 11, wherein said cutting means (10) include at least two cutting units (11, 12) movable independently from each other in said longitudinal direction (D) of progress of the profile sections (2) and each designed capable of cutting a profile section in a cutting direction (C), namely orthogonal to the preceding one.

13. The device according to one of claims 10 to 12, wherein said cutting means (10) include means for clamping (13, 14) the profile sections (2) during the cutting operation.

14. The device according to one of claims 10 to 13, wherein said cutting means (10) are controlled by control and management means (15) according to the position identification performed by said upstream (9) and downstream (8) detection means and/ or wherein said cutting means (10) are grouped on a single cutting device designed movable under the action of motorization means parallel to said longitudinal direction (D), and namely formed by a carriage (16) cooperating with guiding means (17) in this direction.

15. The device according to one of claims 10 to 14, wherein it includes movable means for cutting said sheet strip (3) before its sizing, designed capable of performing a cut perpendicular to its direction of progress and synchronously with the latter a cutting device, so as to be able to cut the sheet strip prior to the sizing operation.
